# EUROPEAN PATENT SPECIFICATION

(11) **EP 2 920 072 B1**
(45) Date of publication and mention of the grant of the patent: **02.09.2020**
(21) Application number: 13854460.6
(22) Date of filing: 14.11.2013
(51) Int. Cl.: F01D 5/14, B23P 15/04

(54) **FAN BLADE AND CORRESPONDING METHOD OF MANUFACTURING**
FAN-LAUFSCHAUFEL UND ZUGEHÖRIGES HERSTELLUNGSVERFAHREN
AUBE ROTORIQUE DE SOUFFLANTE ET PROCÉDÉ ASSOCIÉ DE FABRICATION

(30) Priority: 19.11.2012 US 201261727786 P; 30.09.2013 US 201361884295 P
(43) Date of publication of application: 23.09.2015
(73) Proprietor: United Technologies Corporation, Farmington, CT 06032 (US)
(72) Inventor: WORTH, Edwin M., Northville, Michigan 48168 (US); TILLMAN, Thomas G., West Hartford, Connecticut 06119 (US); SCHWARZ, Frederick M., Glastonbury, Connecticut 06033 (US)
(74) Representative: Dehns
(86) International application number: PCT/US2013/069973
(87) International publication number: WO 2014/078467

(56) References cited:
- EP-A2- 2 362 066
- US-A- 4 839 245
- US-A- 5 299 353
- US-A- 5 603 603
- US-A- 5 908 285
- US-A- 5 908 285
- US-A1- 2005 254 955
- US-B2- 8 057 177

## Description

### TECHNICAL FIELD

This invention relates to a fan blade and to a method of manufacturing a fan blade.

### BACKGROUND ART

Gas turbine engines may be provided with a fan for delivering air to a compressor section and into a bypass section. From the compressor section, the air is compressed and delivered into a combustion section. The combustion section mixes fuel with the air and combusts the combination. Products of the combustion pass downstream over turbine rotors which are driven to rotate and, in turn, drive the compressor and the fan.

Historically, a single turbine rotor may have driven a lower pressure compressor and a fan at the same speed. More recently, a gear reduction has been proposed such as intermediate the lower pressure compressor and the fan, such that the fan can rotate at lower speeds relative to the lower pressure compressor. With this change, the diameter of the fan has increased dramatically and its speed has decreased.

As the fan blade diameter increases, its weight be expected to increase. To address this increase, hollow fan blades have been developed. One type of hollow fan blade has at least one channel and an outer cover attached over a main fan blade body to contain the channel. In addition, an end cap may be placed on the fan body.

The interface of the ends of the end cap and the cover skin, relative to the main fan body, provides an interface that may be in the form of a step.

A fan blade having the features of the preamble of claim 1 is disclosed in US 5908285 A. A fan blade having a channel closed by a cover is disclosed in EP 2362066 A2.

### SUMMARY

From a first aspect, the invention provides a fan blade as set forth in claim 1.

In an embodiment of the above, the main body includes both the cover and the end cap, the end cap at the leading edge, wherein first steps are defined at each of the opposed ends of the cover on one of the suction wall and the pressure wall, and second steps are defined at each of the opposed ends of the end cap on both the suction and pressure walls, and wherein all of the step dimensions are less than or equal to about 0.010 inch (0.0254 centimeter).

In another embodiment according to any of the previous embodiments, an outer surface of the fan blade has a surface roughness. The surface roughness has a root means square value of less than about 60 x 10⁻⁶ inch (1.524 x 10⁻⁶ m) on at least a portion of a radial length of an outer surface of the main body.

In another embodiment according to any of the previous embodiments, a filler material is provided between the end of the one of an end cap and said cover and the main body, with the filler material reducing the size of the steps, and the filler material being part of the cover and the end cap for purposes of measuring the dimensions of the steps.

In another embodiment according to any of the previous embodiments, a filler material is provided between each of the opposed ends of the end caps and cover and the main body, said filler material being considered part of the cover and the end cap for purposes of measuring the dimensions of said step or steps.

In another embodiment according to any of the previous embodiments, the step is present from 20% of a blade span, measured from a blade platform, to a radially outer tip of said airfoil.

In another embodiment according to any of the previous embodiments, a shroud connects the fan blade to an adjacent fan blade.

In another embodiment according to any of the previous embodiments, at least one of the main body, cover, and cap is formed of aluminum or an aluminum alloy, of titanium or a titanium alloy, or of composite.

In another embodiment according to any of the previous embodiments, the main body is formed of composite, a metal, or an alloy, and wherein the cover or the cap is formed of titanium or a titanium alloy.

The invention also provides a method of manufacturing a fan blade, set forth in claim 9.

In another embodiment according to the previous embodiment, the size of the step is reduced by adding a filler material which is considered part of the at least one of an end cap and a cover for purposes of measuring the step dimension.

In another embodiment according to any of the previous embodiments, the main body includes both a cover and an end cap. There are at least four steps associated with ends of the cover spaced toward both the leading and trailing edges and ends of the end cap on each of the pressure and suction walls. All of the dimensions of the steps are made to be less than or equal to about 0.010 inch (0.0254 centimeter).

In another embodiment according to any of the previous embodiments, a surface roughness of the outer surface of the main body, and the at least one of the cover and the end cap is made to be less than about 60 x 10⁻⁶ inch (1.524 x 10⁻⁶ m) over at least a portion of a radial length of an outer surface of the main body.

In another embodiment according to any of the previous embodiments, a machining step is utilized to reduce the surface roughness.

These and other features may be best understood from the following drawings and specification.

### BRIEF DESCRIPTION OF THE DRAWINGS

Figure 1A schematically shows a gas turbine engine.
Figure 1B is a side view of a removed fan blade.
Figure 1C shows the fan blade of Figure 1B in an installed condition.
Figure 2 is a cross-sectional view of the fan blade of Figures 1B, 1C.
Figure 3A is a detail of a location identified by A in Figure 2.
Figure 3BA is a first possibility at an area identified by B in Figure 2.
Figure 3BB shows a second possibility.
Figure 3C shows a possibility at an area identified by C in Figure 2.
Figure 4A shows a corrective method at the location of Figure 3A.
Figure 4BA shows a corrective method at the location of Figure 3BA.
Figure 4BB shows a corrective method at the location of Figure 3BB.
Figure 4C shows a corrective method at the location of Figure 3C.
Figure 5 explains a feature of the fan blade of Figures 1B - 4C.
Figure 6 shows another embodiment.

### DETAILED DESCRIPTION

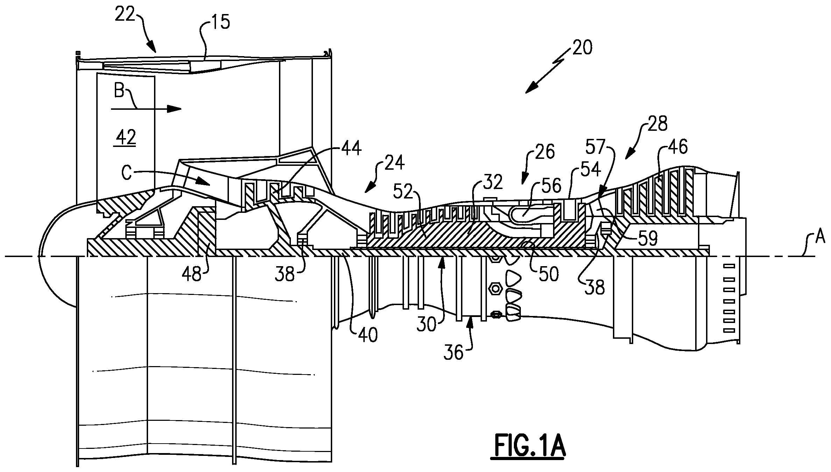

Figure 1A schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans. A significant amount of thrust is provided by the bypass flow B due to the high bypass ratio. The fan section 22 of the engine 20 is designed for a particular flight condition -- typically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 m/s).

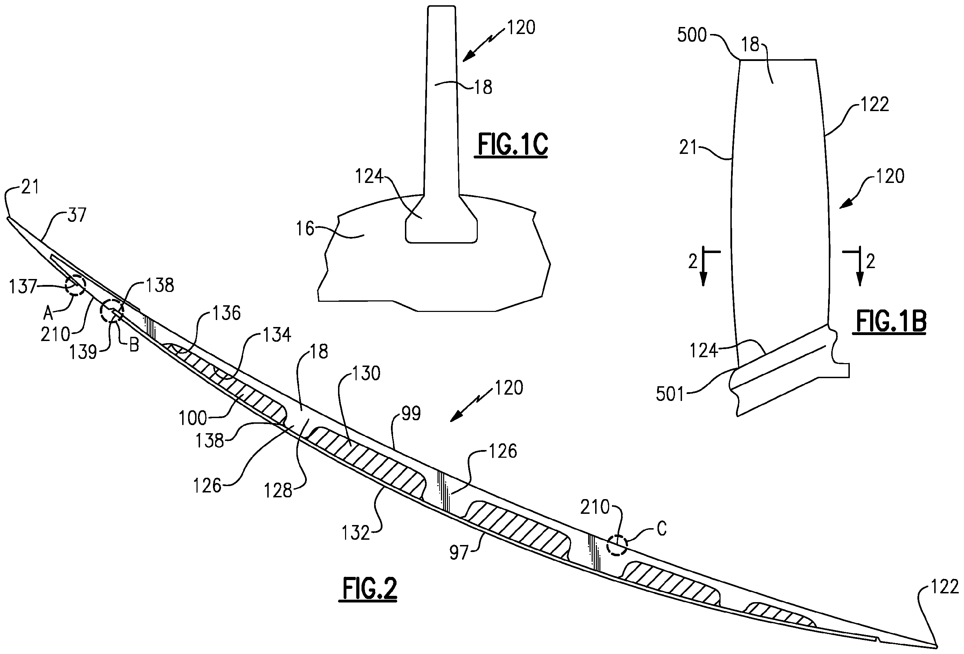

A fan blade 120 which may be utilized in the gas turbine engine 20 is illustrated in Figure 1B having an airfoil 18 extending radially outwardly from a platform 124, which may include, as shown, a dovetail. A leading edge 21 and a trailing edge 122 define the forward and rear limits of the airfoil. As shown in Figure 1B, the airfoil 18 extends from a radially inner end 501 adjacent the platform 124 to a radially outer end 500.

As shown in Figure 1C, a fan rotor 16 will receive the platform 124 to mount the fan blade with the airfoil 18 extending radially outwardly. As the rotor 16 is driven to rotate, it carries the fan blade 120 with it.

Figure 2 shows a cross-section of the fan blade 120 at the airfoil 18. As shown, the leading edge 21 receives a cap 37 secured to a main body 128. A cover 132 closes off cavities or channels 130 in the main body 128. The main body 128, the cap 37 and the cover 132 may all be formed of aluminum or various aluminum alloys. Other materials, such as titanium, titanium alloys or other appropriate metals, may alternatively be utilized for any one or more of the cap 37, the cover 132, and/or the main body 128. Further, other, non-metallic materials, such as composites or plastics, may alternatively and/or additionally be utilized for any one or more of the cap 37, the cover 132, and/or the main body 128.

In addition, while the fan blade 120 is shown having one cover 132 and channels 130 having a closed inner end, it is also possible that the main body 128 would provide a channel extending across its entire thickness with covers at each side. As shown, a plurality of ribs 126 separate the channels 130 in the cross-section illustrated in Figure 2. Filler material 100 may be deposited within the channels 130 and would typically be of a lighter weight than the main body 128.

Applicant has discovered that with the increasing diameter of the fan blade 120 when utilized in geared gas turbine engine, surface smoothness becomes important. If a laminar flow can be achieved at the surface of the airfoil, the fuel burn efficiency and the fan efficiency can be increased dramatically. However, it is challenging to achieve laminar flow on fan blades 120 and, in particular, as their diameter increases and their speed decreases.

In fact, the fan blades mentioned above having a cover 132, or an end cap 37, could be defined as assembled fan blades. These assembled fan blades, applicant has recognized, create steps which could move the actual flow further from laminar than it might be with a solid fan blade.

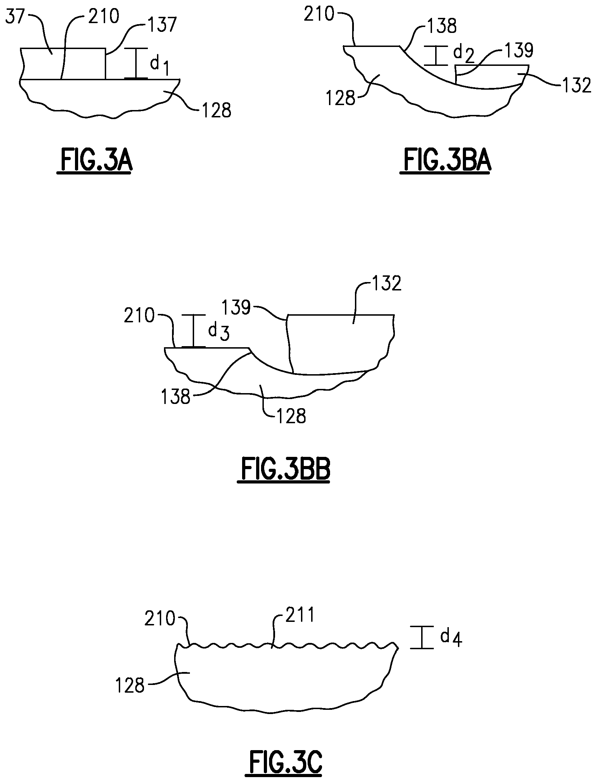

As shown in Figure 3A, an area identified by A in Figure 2 is enlarged. As shown, the cap 37 has an end 137, which is spaced above an outer surface 210 of the main body 128. There is a step of a dimension d₁ between the two.

Similarly, Figure 3BA shows one possibility at the location B in Figure 2. Here, the cover 132 has its end 139 spaced from the outer surface 210 by a step of a dimension d₂. This would be a "negative" step.

Figure 3BB shows the opposite wherein the cover 132 extends above the surface 210 by a dimension d₃. This might be called a positive step.

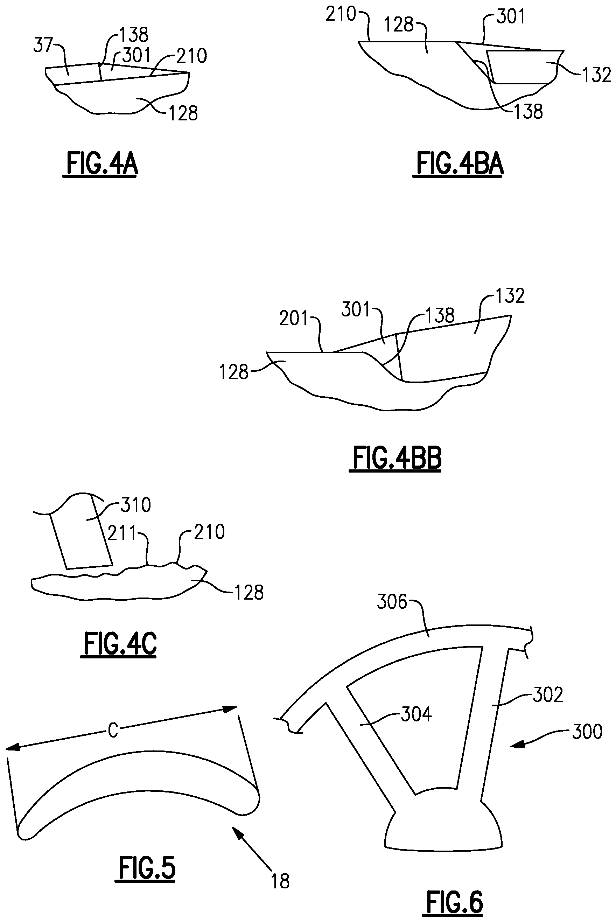

Applicant has discovered that these steps must be minimized to achieve laminar flow. In particular, the steps should be less than or equal to about 0.010 inch (0.0254 centimeter). This requirement can be performed as part of a quality control step and, if any of the dimensions d₁ - d₃ are outside of this dimension, then corrective steps may be taken. As an example, as shown in Figure 4A, 4BB and 4BA, a putty 301 may be included to take up the step and reduce the sudden change between the two surfaces.

Stated another way, a chord length C for the blade airfoils 18 may be defined as shown in Figure 5. In one embodiment, rather than the 0.010 inch (0.0254 centimeter) maximum, the dimensions d₁ - d₃ could be defined as being kept within a maximum ratio with regard to the chord length C. In one embodiment, the maximum allowable step was 0.010 inch (0.0254 centimeter), and the chord length C was 10 inches (25.4 centimeters). In this embodiment, a ratio of d₁ - d₃ to C is less than or equal to about .001. For this embodiment, C is measured at a tip of the airfoil 18, and between its leading and trailing edges.

As mentioned above, the reduction of the steps may be provided on each of the suction side 99 and pressure side 97 (see Figure 2) of the airfoil at all positions wherein there is a step. In addition, the corrective measure may be more important at different radial locations between the radial ends 500 and 501 of the airfoil 18 (see Figure IB).

For purposes of measuring the step height after the corrective steps of Figures 4A, 4BA, and 4BB, the putty 301 is considered part of the cover 132 or end cap 37. While putty is disclosed, other filler materials may be used.

Figure 3C shows yet another concern. A surface roughness at the surface 210 may be identified as surface irregularities 211 and may have a highest dimension d₄. It would be desirable that this surface roughness be minimized. Applicant has found that maintaining a surface roughness with a root means square value of less than about 60 x 10⁻⁶ inch (1.524 10⁻⁶ m) would result in a fan blade providing more laminar flow.

As shown in Figure 4C, this may be achieved by machining such as applying a polishing or smoothing tool 310 to the irregularities 211.

Applicant has also discovered that the most important portion of the fan blade to have the required smoothness are from about 20% of the blade span radially outwardly, measured along a length of airfoil 18 to 100% of the airfoil 18, at its tip.

In addition, applicant has determined that the results achieved by a fan blade having the disclosed characteristics are most beneficial when a fan tip corrected speed is below about 1225 ft/second (373.4 m/s) at bucket cruise, and even more beneficial when the fan speed is below 1150 ft/second (350.5 m/s). Further, the benefits are more pronounced when the fan rotor carries 26 or fewer fan blades.

Now, an assembled fan blade having either the small step size or the very smooth outer surface will achieve laminar flow over a greater percentage of its surface area. These treatments can be applied at any radial location between ends 501 and 500 or over all of those portions. In addition, they may be provided on only the suction side 99, only the pressure side 97 or both.

Figure 6 shows an alternate embodiment fan rotor 300 wherein blades 302 and 304 have a shroud 306 extending between them. The shroud 306 provides additional rigidity to the structure to enhance laminar flow across the fan blades 302, 304. The shroud of this embodiment may be used in conjunction with any of the foregoing surface treatments described with respect to the embodiments of Figures 2-5.

Although an embodiment of this invention has been disclosed, a worker of ordinary skill in this art would recognize that certain modifications would come within the scope of this disclosure. For that reason, the following claims should be studied to determine the true scope and content of this disclosure.

## Claims

1. A fan blade (120) comprising:
a main body (128) having an airfoil (18) extending between a leading edge (21) and a trailing edge (122) and the fan blade having at least one of:
(a) a cover (132) closing a channel (130), and
(b) an end cap (37) covering at least one of the leading and trailing edges (21,122); and
the at least one of a cover (132) and an end cap (37) having a pair of opposed ends, and a step defined extending from at least one of a suction wall (99) and a pressure wall (97) of the airfoil (18), to an outer surface of said one of said cover (132) and said end cap (37) at one of said opposed ends, and said step being less than or equal to about 0.010 inch (0.0254 centimeter) in dimension; **characterised in that**:
said fan blade (120) has a chord length, and a ratio of said step dimension to said chord length is less than or equal to about 0.001.

2. The fan blade as set forth in claim 1, wherein said main body (128) includes both said cover (132) and said end cap (37), the end cap (37) at said leading edge (21), wherein first steps are defined at each of said opposed ends of said cover (132) on one of said suction wall (99) and said pressure wall (97), and second steps are defined at each of said opposed ends of said end cap (37) on both said suction and pressure walls (99,97), and wherein all of said step dimensions are less than or equal to about 0.010 inch (0.0254 centimeter).

3. The fan blade as set forth in claim 1 or 2, wherein an outer surface of said fan blade (120) has a surface roughness and said surface roughness has a root means square value of less than about 60 x 10⁻⁶ inch (1.524 10⁻⁶ m) on at least a portion of a radial length of an outer surface of the main body (128).

4. The fan blade as set forth in claim 1, 2 or 3, wherein a filler material is provided between said end of said one of an end cap and said cover and said main body or each of said opposed ends of said end caps (37) and cover (132) and said main body (128), said filler material being considered part of said cover (132) and said end cap (37) for purposes of measuring said dimensions of said step or steps.

5. The fan blade as set forth in any preceding claim, wherein said step is present from 20% of the blade span, measured from a blade platform, to a radially outer tip of said airfoil.

6. The fan blade as set forth in any preceding claim, comprising a shroud (306) for connecting the fan blade to an adjacent fan blade.

7. The fan blade as set forth in any preceding claim, wherein at least one of the main body (128), cover (132), and cap (37) is formed of aluminum or an aluminum alloy, of titanium or a titanium alloy, or of composite.

8. The fan blade as set forth in any preceding claim, wherein the main body (128) is formed of composite, a metal, or an alloy, and wherein the cover (132) or the cap (37) is formed of titanium or a titanium alloy.

9. A method of manufacturing a fan blade (120) comprising the steps of:
providing a main body (128) extending between a leading edge (21) and a trailing edge (122), and having a suction wall (99) and a pressure wall (97), with said main body (128) having at least one of a channel (130) enclosed by a cover (132), and an end cap (37) covering at least one of said leading and trailing edges (21,122), with said at least one of a cover (132) and an end cap (37) being assembled to said main body (128), and defining a step between at least one of the suction and pressure walls (99,97) and an end of the at least one of a cover (37) and an end cap (132), and the step being made to be less than or equal to about 0.010 inch (0.0254 centimeter) in dimension; **characterised in that**:
the fan blade (120) defines a chord length, and a ratio of said step dimension to said chord length is less than or equal to about 0.001.

10. The method as set forth in claim 9, wherein the size of the step is reduced by adding a filler material which is considered part of the at least one of an end cap (37) and a cover (132) for purposes of measuring said step dimension.

11. The method as set forth in claim 9 or 10, wherein the main body (128) includes both a cover (132) and an end cap (37) and there are at least four steps associated with ends of the cover (132) spaced toward both the leading and trailing edges (21,132) and ends of the end cap (37) on each of the pressure and suction walls (97,99), and all of said dimensions of said steps being made to be less than or equal to about 0.010 inch (0.0254 centimeter).

12. The method as set forth in claim 9, 10 or 11, wherein a surface roughness of the outer surface of the main body (128), and the at least one of the cover (132) and the end cap (37) is made to be less than about 60 x 10⁻⁶ inch (1.524 10⁻⁶ m) over at least a portion of a radial length of an outer surface of the main body (128).

13. The method as set forth in claim 12, wherein a machining step is utilized to reduce the surface roughness.

## Patentansprüche

1. Fan-Laufschaufel (120), umfassend:
einen Hauptkörper (128) mit einem Schaufelprofil (18), das sich zwischen einer Vorderkante (21) und einer Hinterkante (122) erstreckt, und wobei die Fan-Laufschaufel mindestes eines von Folgendem aufweist:
(a) einer Abdeckung (132), die einen Kanal (130) verschließt, und
(b) einer Endkappe (37), die mindestens eine von der Vorder- und der Hinterkante (21,122) abdeckt; und
wobei die mindestens eine von einer Abdeckung (132) und einer Endkappe (37) ein Paar gegenüberliegender Enden und eine Stufe aufweist, die so definiert ist, dass sie sich von mindestens einer von einer Saugwand (99) und einer Druckwand (97) des Schaufelprofils (18) zu einer Außenfläche der einen von der Abdeckung (132) und der Endkappe (37) an einem der gegenüberliegenden Enden erstreckt, und wobei die Stufe weniger als oder gleich etwa 0,010 Zoll (0,0254 Zentimeter) in ihrer Abmessung beträgt; **dadurch gekennzeichnet, dass**:
die Fan-Laufschaufel (120) eine Flügeltiefe aufweist, und wobei ein Verhältnis der Stufenabmessung zu der Flügeltiefe weniger als oder gleich etwa 0,001 beträgt.

2. Fan-Laufschaufel nach Anspruch 1, wobei der Hauptkörper (128) sowohl die Abdeckung (132) als auch die Endkappe (37) beinhaltet, wobei die Endkappe (37) an der Vorderkante (21) angeordnet ist, wobei erste Stufen an jedem der gegenüberliegenden Enden der Abdeckung (132) an einer von der Saugwand (99) und der Druckwand (97) definiert sind, und wobei zweite Stufen an jedem der gegenüberliegenden Enden der Endkappe (37) an sowohl der Saug- als auch der Druckwand (99,97) definiert sind, und wobei alle Stufenabmessungen weniger als oder gleich etwa 0,010 Zoll (0,0254 Zentimeter) betragen.

3. Fan-Laufschaufel nach Anspruch 1 oder 2, wobei eine Außenfläche der Fan-Laufschaufel (120) eine Oberflächenrauheit aufweist und die Oberflächenrauheit einen quadratischen Mittelwert von weniger als etwa 60 x 10⁻⁶ Zoll (1,524 10⁻⁶ m) an mindestens einem Abschnitt einer radialen Länge einer Außenfläche des Hauptkörpers (128) aufweist.

4. Fan-Laufschaufel nach Anspruch 1, 2 oder 3, wobei ein Füllmaterial zwischen dem Ende der einen von einer Endkappe und der Abdeckung und dem Hauptkörper oder jedem der gegenüberliegenden Enden der Endkappen (37) und der Abdeckung (132) und dem Hauptkörper (128) bereitgestellt ist, wobei das Füllmaterial als Teil der Abdeckung (132) und der Endkappe (37) betrachtet wird, um die Abmessungen der Stufe oder Stufen zu messen.

5. Fan-Laufschaufel nach einem der vorhergehenden Ansprüche, wobei die Stufe ab 20 % der Laufschaufelspanne, gemessen von einer Laufschaufelplattform aus, zu einer radial äußeren Spitze des Schaufelprofils vorhanden ist.

6. Fan-Laufschaufel nach einem der vorhergehenden Ansprüche, umfassend eine Ummantelung (306) zum Verbinden der Fan-Laufschaufel mit einer benachbarten Fan-Laufschaufel.

7. Fan-Laufschaufel nach einem der vorhergehenden Ansprüche, wobei mindestens eines von dem Hauptkörper (128), der Abdeckung (132) und der Kappe (37) aus Aluminium oder einer Aluminiumlegierung, aus Titan oder einer Titanlegierung oder aus einem Verbundwerkstoff gebildet ist.

8. Fan-Laufschaufel nach einem der vorhergehenden Ansprüche, wobei der Hauptkörper (128) aus einem Verbundwerkstoff, einem Metall oder einer Legierung gebildet ist, und wobei die Abdeckung (132) oder die Kappe (37) aus Titan oder einer Titanlegierung gebildet ist.

9. Verfahren zum Herstellen einer Fan-Laufschaufel (120), das die folgenden Schritte umfasst:
Bereitstellen eines Hauptkörpers (128), der sich zwischen einer Vorderkante (21) und einer Hinterkante (122) erstreckt und eine Saugwand (99) und eine Druckwand (97) aufweist, wobei der Hauptkörper (128) mindestens eines von einem durch eine Abdeckung (132) umschlossenen Kanal (130) und einer Endkappe (37), die mindestens eine von der Vorder- und der Hinterkante (21,122) abdeckt, aufweist, wobei die mindestens eine von einer Abdeckung (132) und einer Endkappe (37) an dem Hauptkörper (128) montiert ist und eine Stufe zwischen mindestens einer von der Saug- und der Druckwand (99,97) und einem Ende der mindestens einen von einer Abdeckung (37) und einer Endkappe (132) definiert, und wobei die Stufe derart gefertigt ist, dass sie weniger als oder gleich etwa 0,010 Zoll (0,0254 Zentimeter) in ihrer Abmessung beträgt; **dadurch gekennzeichnet, dass**:
die Fan-Laufschaufel (120) eine Flügeltiefe aufweist und ein Verhältnis der Stufenabmessung zu der Flügeltiefe weniger als oder gleich etwa 0,001 beträgt.

10. Verfahren nach Anspruch 9, wobei die Größe der Stufe reduziert wird, indem ein Füllmaterial hinzugefügt wird, das als Teil der mindestens einen von einer Endkappe (37) und einer Abdeckung (132) betrachtet wird, um die Stufenabmessung zu messen.

11. Verfahren nach Anspruch 9 oder 10, wobei der Hauptkörper (128) sowohl eine Abdeckung (132) als auch eine Endkappe (37) beinhaltet und mindestens vier Stufen vorhanden sind, die mit Enden der Abdeckung (132), welche in Richtung sowohl der Vorder- als auch der Hinterkante (21,132) beabstandet sind, und Enden der Endkappe (37) an jeder von der Druck- und der Saugwand (97,99) assoziiert sind, und wobei alle Abmessungen der Stufen derart gefertigt sind, dass sie weniger als oder gleich etwa 0,010 Zoll (0,0254 Zentimeter) betragen.

12. Verfahren nach Anspruch 9, 10 oder 11, wobei eine Oberflächenrauheit der Außenfläche des Hauptkörpers (128) und mindestens einen von der Abdeckung (132) und der Endkappe (37) derart gefertigt ist, dass sie weniger als etwa 60 x 10⁻⁶ Zoll (1,524 10⁻⁶ m) über mindestens einen Abschnitt einer radialen Länge einer Außenfläche des Hauptkörpers (128) beträgt.

13. Verfahren nach Anspruch 12, wobei ein Bearbeitungsschritt dazu genutzt wird, die Oberflächenrauheit zu reduzieren.

## Revendications

1. Aube de soufflante (120) comprenant :
un corps principal (128) ayant un profil aérodynamique (18) s'étendant entre un bord d'attaque (21) et un bord de fuite (122) et l'aube de soufflante ayant au moins l'un parmi :
(a) un couvercle (132) fermant un canal (130), et
(b) un capuchon d'extrémité (37) recouvrant au moins l'un des bords d'attaque et de fuite (21,122) ; et
l'au moins un parmi un couvercle (132) et un capuchon d'extrémité (37) ayant une paire d'extrémités opposées, et une surépaisseur définie s'étendant d'au moins l'une d'une paroi d'aspiration (99) et d'une paroi de pression (97) du profil aérodynamique (18), à une surface extérieure dudit couvercle (132) et dudit capuchon d'extrémité (37) à l'une desdites extrémités opposées, et ladite surépaisseur ayant une dimension inférieure ou égale à environ 0,010 pouce (0,0254 centimètre) ;
**caractérisée en ce que** :
ladite aube de soufflante (120) a une longueur de corde, et un rapport de ladite dimension de surépaisseur à ladite longueur de corde est inférieur ou égal à environ 0,001.

2. Aube de soufflante selon la revendication 1, dans laquelle ledit corps principal (128) comporte à la fois ledit couvercle (132) et ledit capuchon d'extrémité (37), le capuchon d'extrémité (37) au niveau dudit bord d'attaque (21), dans laquelle des premières surépaisseurs sont définies à chacune desdites extrémités opposées dudit couvercle (132) sur l'une de ladite paroi d'aspiration (99) et de ladite paroi de pression (97), et des secondes surépaisseurs sont définies à chacune desdites extrémités opposées dudit capuchon d'extrémité (37) sur les parois d'aspiration et de pression (99,97), et dans laquelle l'ensemble desdites dimensions de surépaisseur sont inférieures ou égales à environ 0,010 pouce (0,0254 centimètre).

3. Aube de soufflante selon la revendication 1 ou 2, dans laquelle une surface extérieure de ladite aube de soufflante (120) a une rugosité de surface et ladite rugosité de surface a une valeur quadratique moyenne inférieure à environ 60 x 10⁻⁶ pouces (1,524 10⁻⁶ m) sur au moins une partie d'une longueur radiale d'une surface extérieure du corps principal (128).

4. Aube de soufflante selon la revendication 1, 2 ou 3, dans laquelle un matériau de remplissage est prévu entre ladite extrémité dudit un parmi un capuchon d'extrémité et ledit couvercle et ledit corps principal ou chacune desdites extrémités opposées desdits capuchons d'extrémité (37) et dudit couvercle (132) et dudit corps principal (128), ledit matériau de remplissage étant considéré comme faisant partie dudit couvercle (132) et dudit capuchon d'extrémité (37) dans le but de mesurer lesdites dimensions de ladite ou desdites surépaisseurs.

5. Aube de soufflante selon une quelconque revendication précédente, dans laquelle ladite surépaisseur est présente à 20 % de l'envergure de l'aube, mesurée à partir d'une plateforme d'aube, jusqu'à une pointe radialement extérieure dudit profil aérodynamique.

6. Aube de soufflante selon une quelconque revendication précédente, comprenant un carénage (306) pour relier l'aube de soufflante à une aube de soufflante adjacente.

7. Aube de soufflante selon une quelconque revendication précédente, dans laquelle au moins l'un du corps principal (128), du couvercle (132) et du capuchon (37) est constitué d'aluminium ou d'un alliage d'aluminium, de titane ou d'un alliage de titane, ou de composite.

8. Aube de soufflante selon une quelconque revendication précédente, dans laquelle le corps principal (128) est constitué de composite, d'un métal ou d'un alliage, et dans laquelle le couvercle (132) ou le capuchon (37) est constitué de titane ou d'un alliage de titane.

9. Procédé de fabrication d'une aube de soufflante (120) comprenant les étapes :
de fourniture d'un corps principal (128) s'étendant entre un bord d'attaque (21) et un bord de fuite (122), et ayant une paroi d'aspiration (99) et une paroi de pression (97), ledit corps principal (128) ayant au moins l'un d'un canal (130) enfermé par un couvercle (132), et d'un capuchon d'extrémité (37) recouvrant au moins l'un desdits bords d'attaque et de fuite (21,122), ledit au moins un parmi un couvercle (132) et un capuchon d'extrémité (37) étant assemblé audit corps principal (128), et définissant une surépaisseur entre au moins l'une des parois d'aspiration et de pression (99,97) et une extrémité de l'au moins un parmi un couvercle (37) et un capuchon d'extrémité (132), et la surépaisseur étant faite pour être inférieure ou égale à environ 0,010 pouce (0,0254 centimètre) de dimension ; **caractérisé en ce que** :
l'aube de soufflante (120) définit une longueur de corde, et un rapport de ladite dimension de surépaisseur à ladite longueur de corde est inférieur ou égal à environ 0,001.

10. Procédé selon la revendication 9, dans lequel la taille de la surépaisseur est réduite en ajoutant un matériau de remplissage qui est considéré comme faisant partie de l'au moins un parmi un capuchon d'extrémité (37) et un couvercle (132) dans le but de mesurer ladite dimension de surépaisseur.

11. Procédé selon la revendication 9 ou 10, dans lequel le corps principal (128) comporte à la fois un couvercle (132) et un capuchon d'extrémité (37) et il y a au moins quatre étages associés à des extrémités du couvercle (132) espacés vers à la fois les bords d'attaque et de fuite (21,132) et les extrémités du capuchon d'extrémité (37) sur chacune des parois de pression et d'aspiration (97,99), et l'ensemble desdites dimensions desdites surépaisseur étant faites pour être inférieures ou égales à environ 0,010 pouce (0,0254 centimètre).

12. Procédé selon la revendication 9, 10 ou 11, dans lequel une rugosité de surface de la surface extérieure du corps principal (128), et l'au moins un parmi le couvercle (132) et le capuchon d'extrémité (37) est fait(e) pour être inférieur (e) à environ 60 x 10⁻⁶ pouces (1,524 10⁻⁶ m) sur au moins une partie d'une longueur radiale d'une surface extérieure du corps principal (128) .

13. Procédé selon la revendication 12, dans lequel une étape d'usinage est utilisée pour réduire la rugosité de surface.
